# EUROPÄISCHE PATENTSCHRIFT

(11) **EP 0 475 220 B1**
(45) Veröffentlichungstag und Bekanntmachung des Hinweises auf die Patenterteilung: **05.10.1994**
(21) Anmeldenummer: 91114647.0
(22) Anmeldetag: 30.08.1991
(51) Int. Cl.: B32B 27/08

(54) **Mehrschichtenfolien**
Laminates
Produits stratifiés

(30) Priorität: 12.09.1990 DE 4028888
(43) Veröffentlichungstag der Anmeldung: 18.03.1992
(73) Patentinhaber: BAYER AG, 51368 Leverkusen (DE)
(72) Erfinder: Schmidt, Fritz, W-5090 Leverkusen (DE); Braese, Hans-Eberhard, Dipl.-Ing., W-5000 Köln 71 (DE); Piejko, Karl-Erwin, Dr., W-5060 Bergisch Gladbach 2 (DE); Lindner, Christian, Dr., W-5000 Köln 80 (DE)

(56) Entgegenhaltungen:
- EP-A- 0 295 494
- EP-A- 0 321 832

## Beschreibung

Mehrschichtfolien sind bekannt. Sie werden verwendet für Lebensmittelverpackung, Verpackung medizinischer Artikel, Sportartikel sowie für Lautsprecherkonusse (siehe beispielsweise DE-OS 3 722 832).

Mehrschichtfolien werden durch Coxtrusion, Extrusionsbeschichtung sowie Laminieren hergestellt.

Für Crash pad-Anwendungen, also als Außenhaut für Kfz-Armaturen, haben sich bisher Folien auf Basis von PVC, das mit den unterschiedlichsten Polymeren modifiziert wird, bewährt. Solche Folien werden üblicherweise auf ein Stützgerüst aufgebracht und mit Polyurethanschaum hinterschäumt, da sie keine Formstabilität besitzen.

Die Anforderungen an derartige Folien sind
- gute Prägbarkeit z.B. zu einer Lederimitation
- gute Verformbarkeit der geprägten Folie
- beständig gegen übliche Reinigungsmittel
- Haftung zum Gehäusematerial
- Schlagzähigkeit
- keine Ausgasung (Fogging)
- gute Narbenstandfestigkeit bei hoher Temperatur

Neue Forderungen, nach der eine Crash pad-Folie eine Langzeit-Temperaturbeständigkeit von 130°C und eine Formstabilität ohne Hinterschäumen und Stützgerüst haben muß, können von PVC-haltigen Folien nicht mehr erfüllt werden.

Um diese neuen Forderungen zu erfüllen, wurden zahlreiche Materialien getestet, jedoch ohne den gewünschten Erfolg in allen Punkten.

Ein wesentlicher Grund dafür ist in der Eigenschaftskombination zu sehen: Gebrauch bei hohen Temperaturen - Standfestigkeit der aufgebrachten Ledernarben bei hohen Temperaturen.

Es sind zwar Materialien (auch Mehrschichtfolien) entwickelt worden, die das oben genannte Eigenschaftsprofil sogenannter Crash pad-Folien (Lederersatzfolien im Kfz-Sektor) im wesentlichen erfüllen, allerdings scheitert deren technische Nutzung bisher an der mangelhaften sogenannten Standfestigkeit der Ledernarbung bzw. der Formstabilität ohne Stützgerüst.

Überraschenderweise wurde nun gefunden, daß sich PVC-freie Folien mit dem erforderlichen Eigenschaftsprofil dann erzeugen lassen, wenn man eine Mehrschichtfolie einsetzt, bei der eine Schicht eine hohe Dauer-Gebrauchstemperatur aufweist und bei der eine weitere Schicht aus einer Mischung eines Polyurethan und bestimmten Acrylatkautschukpolymerisaten besteht.

Gegenstand der Erfindung sind somit Mehrschichtfolien, insbesondere einer Dicke von 0,8 - 2 mm, aus
A einer 0,3 mm - 1,8 mm dicken thermoplastischen Folie mit einer Dauer-Temperaturbeständigkeit größer 130°C, insbesondere die einen E-Modul im Bereich von -40°C bis +130°C von 1 000 - 20 000 MPa aufweist und
B einer 0,4 mm - 1,5 mm dicken zäh-elastischen Folie aus einer Mischung aus
   B1 einem thermoplastischen Polyester-, Polyether- und Polyethercarbonaturethan, insbesondere einem aliphatischen thermoplastischen Polyetherurethan,
   B2 einem Acrylatkautschukpolymerisat, insbesondere einem Acrylatpfropfkautschuk und/oder einem Acrylatcopolymerkautschuk und
   B3 gegebenenfalls einem Thermoplastharz aus der Reihe der Vinylpolymerisate (mit Ausnahme halogenenthaltender Monomere), insbesondere Polymerisate auf der Basis von Styrol, Acrylnitril, α-Methylstyrol oder Alkylmethacrylat,
   wobei die Komponente B1 zu 90 bis 10 Gew.-Teilen und die Komponente B2 zu 10 bis 90 Gew.-Teilen vorliegt.

Gegenstand der vorliegenden Erfindung ist außerdem die Verwendung der erfindungsgemäßen Mehrschichtfolien zur Herstellung von Crash-pad-Folien.

Erfindungsgemäß geeignete Folien gemäß Komponente A sind solche aus bekannten thermoplastischen Kunststoffen wie aromatischen Polycarbonaten, aromatischen Polyarylsulfonen, aromatischen Polyestern oder Polyphenylensulfiden.

Erfindungsgemäß besonders geeignete Folien A sind solche aus thermoplastischen, aromatischen Polycarbonaten mit Molekulargewichten M̅_{w} (Gewichtsmittel) von 10.000 bis 200.000, vorzugsweise 15.000 bis 100.000 und insbesondere von 15.000 bis 50.000 (M̅_{w} ermittelt aus der relativen Viskosität ηᵣₑₗ in CH₂Cl₂ bei 20°C bei einer Konzentration von 0,5 g pro 100 ml). Weitere erfindungsgemäß geeignete Folien A aus thermoplastischen Kunststoffen sind solche aus bekannten, thermoplastischen Polyarylsulfonen, welche linear (vergl. DE-OS 27 35 144) oder verzweigt (vergl. DE-OS 27 35 092 undDE-OS 23 05 413) sein können.

Besonders geeignete lineare Polyarylsulfone sind bekannte aromatische Polysulfone oder Polyethersulfone mit Molekulargewichten M̅_{w} (Gewichtsmittel gemessen durch Lichtstreuung) zwischen etwa 15.000 und etwa 55.000, vorzugsweise zwischen etwa 20.000 und etwa 40.000. Solche Polyarylsulfone sind beispielsweise in DE-OS 17 19 244 und US-PS 33 65 517 beschrieben.

Geeignete verzweigte Polyarysulfone sind insbesondere die verzweigten Polyarylethersulfone gemäß DE-OS 23 05 413 und US-PS 39 60 815, deren Molekulargewicht M̅_{w} zwischen etwa 15.000 und etwa 50.000, vorzugsweise zwischen etwa 20.000 und 40.000 liegen.

Materialien B1 der Folienkomposition B sind Polyester-, Polyether- und Polyethercarbonaturethane.

Für nähere Einzelheiten sei auf die DE-AS 30 10 143 verwiesen.

Geeignete Polyetherurethane können hergestellt werden gemäß DE-PS 2 302 564. Geeignete Polyesterurethane können gemäß DE-OS 2 842 806 erhalten werden und geeignete Polyethercarbonat-Urethane gemäß DE-OS 2 248 382.

Besonders bevorzugt sind Polyethercarbonat-Urethane mit einem spezifischen Gewicht von 1,13 bis 1,17, bevorzugt 1,15 g/cm³.

Materialien B2 der Folienkomposition B sind partiell vernetzte Acrylatcopolymere und/oder Pfropfpolymerisate aus Vinylmonomerpolymerisat und teilchenförmigen partiell vernetzten Acrylatkautschuken als Pfropfgrundlage.

Besonders geeignete Komponenten B2 sind wenigstens partiell vernetztes Alkylacrylatcopolymer aus einem C₁-C₆-Alkylacrylat und Acrylnitril, Styrol, Vinylacetat und/oder C₁-C₆-Alkylmethacrylat.

Die mittlere Teilchengröße der Copolymeren B2 beträgt vorzugsweise 0,07-0,8 µm (d₅₀-Wert).

Weitere besonders geeignete Komponenten B2 sind Pfropfpolymerisate von Vinylmonomeren aus der Reihe Styrol, α-Methylstyrol, Acrylnitril, Alkyl(meth)acrylat auf Alkylacrylatkautschuke einer Teilchengröße von 0,08-0,8 µm und Gelgehalten über 50 Gew.-%.

Die Vernetzung der Komponente B2 wird grundsätzlich durch die Mitverwendung von vernetztend wirkenden Vinyl- oder Allylmonomeren während der Herstellung der Acrylatpolymerisatkomponente erreicht.

Die Acrylatkautschuke oder -copolymere im Sinne der Erfindung sind aufgebaut aus C₁-C₆-Alkylacrylat, gegebenenfalls Comonomeren wie Styrol, Acrylnitril, Vinylacetat oder C₁-C₆-Alkylmethacrylat sowie geringen Mengen (bis zu 2 Gew.-%) vernetztend wirkender Comonomerer.

Die Komponenten B2 sind durchweg bekannt.

Thermoplastharze B3 sind kautschukfreie Harzpolymere auf der Basis von Styrol oder α-Methylstyrol und Acrylnitril.

Insbesondere bevorzugte Mischungen B bestehen aus 90-10 Gew.-Teilen B1 und 10-90 Gew.-Teilen einer Mischung B2 aus 20-80 Gew.-% Acrylatpfropfkautschuk und 80-20 Gew.-% Acrylatinterpolymer (%-Angaben beziehen sich auf 100 Gew.-Teile B2).

Besonders vorteilhafte und weiterhin bevorzugte Mischungen B, enthaltend bis zu 20 Gew.-% Harzkomponente B3 bezogen auf 100 Gew.-Tle B2.

Alle Komponenten B1 bis B3 sind bekannte Polymere.

Die thermoplastischen Polyurethane (Komponenten B1) sind an sich bekannt und werden nach Verfahren des Standes der Technik hergestellt. Sie sind im allgemeinen aus langkettigen Polyolen vom Molekulargewicht 400-10.000, Diisocyanaten und Kettenverlängerungsmitteln (vorzugsweise kurzkettigen Polyolen) vom Molekulargewicht bis zu 400 aufgebaut, wobei das NCO/OH-Verhältnis in der Regel bei 0,95 bis 1,10 liegt.

Als im wesentlichen lineare Polyole mit Molekulargewichten zwischen 400 und 10.000, bevorzugt zwischen 800 und 6.000, kommen praktisch alle an sich bekannten, vorzugsweise 2, gegebenenfalls - in untergeordneten Mengen - auch 3, zerewitinoffaktive Gruppen (im wesentlichen Hydroxylgruppen) enthaltenden Polyester, Polylactone, Polyether, Polythioether, Polyesteramide, Polycarbonate, Polyacetale, Vinylpolymere wie z.B. Polybutadiendiole, bereits Urethan- oder Harnstoffgruppen enthaltende Polyhydroxylverbindungen, gegebenenfalls modifizierte natürliche Polyole sowie auch andere zerewitinoffaktive Gruppen wie Amino-, Carboxyl- oder Thiolgruppen enthaltende Verbindungen in Betracht. Diese Verbindungen entsprechen dem Stand der Technik und werden z.B. in den DE-Offenlegungsschriften 23 02 564, 24 23 764 und 25 49 372 (US-Patent 3 963 679) und 24 02 840 (US-Patent 3 984 607) sowie der DE-AS 24 57 387 (US-Patent 4 035 213) eingehend beschrieben. Bevorzugt sind hydroxylgruppenhaltige Polyester aus Glykolen bzw. Adipinsäure, Phthal- und/oder Terephthalsäure sowie deren Hydrierungsprodukten, Hydroxylpolycarbonate, Polycaprolactone, Polyethylenoxid, Polypropylenoxid, Polytetrahydrofuran und Mischpolyether aus Ethylenoxid und Propylenoxid.

Zu verwendende Diisocyanate sind die an sich bekannten aliphatischen, cycloaliphatischen, aromatischen, araliphatischen und heterocyclischen Diisocyanate des Standes der Technik, wie sie z.B. in den bereits genannten DE-Offenlegungsschriften 23 02 564, 24 23 764, 25 49 372, 24 02 840 und 24 57 387 beschrieben sind. Bevorzugte Diisocyanate sind gegegebenenfalls durch Methylgruppen substituiertes Hexamethylendiisocyanat, Isophoronodiisocyanat und 4,4'-Diisocyanatodiphenylmethan.

Die genannten Diisocyanate können gegebenenfalls zusammen mit bis zu ca. 15 Mol-% (bezogen auf Diisocyanat) eines höherfunktionellen Polyisocyanats eingesetzt werden; die Menge des höherfunktionellen Polyisocyanats muß jedoch so begrenzt werden, daß ein noch schmelzbares bzw. thermoplastisches Produkt erhalten wird. Eine größere Menge an höherfunktionellen Isocyanaten muß im allgemeinen durch die Mitverwendung von im Durchschnitt weniger als difunktionellen Hydroxyl- bzw. Aminoverbindungen (bzw. auch Monoisocyanaten) ausgeglichen werden, so daß eine zu weit gehende chemische Vernetzung des Produktes vermieden wird. Es ist aber selbstverständlich auch möglich, die Reaktion so zu führen, daß eine nachträgliche chemische Vernetzung des Elastomeren während der Lagerung eintritt (z.B. durch Verwendung eines Überschusses an NCO-Gruppen enthaltenden Verbindungen). Beispiele für höherfunktionelle Isocyanate und monofunktionelle Verbindungen sind ebenfalls dem oben zitierten Stand der Technik zu entnehmen. Beispielsweise seien Monoamine wie Butyl- und Dibutylamin, Octylamin, Stearylamin, N-Methylstearylamin, Pyrrolidin, Piperidin und Cyclohexylamin sowie Monoalkohole wie Butanol, 1-Ethylhexanol, Octanol, Dodecanol, Amylalkohole, Cyclohexanol und Ethylenglykolmonoethylether erwähnt.

Auch die einzusetzenden Kettenverlängerungsmittel sind an sich bekannt und z.B. in DE-A 23 02 564, 24 23 764, 25 49 372, 24 02 799, 24 02 840 und 24 57 387 beschrieben. Es sind dies niedermolekulare Polyalkohole (vorzugsweise Glykole), Polyamine, Hydrazine und Hydrazide. Auch Aminoalkohole wie Ethanolamin, Diethanolamin, N-Methyldiethanolamin, Triethanolamin und 3-Aminopropanol kommen erfindungsgemäß in Frage. Bevorzugte Kettenverlängerungsmittel sind Ethylenglykol, Di- und Triethylenglykol, 1,2-Propandiol, 1,3- und 1,4-Butandiol, 1,6-Hexandiol, 2-Ethylhexandiol-(1,3), 2,2-Dimethylpropandiol, 1,4-Bis-hydroxymethylcyclohexan und Hydrochinondihydroxyethylether. Besonders bevorzugt sind Hydrochinondi-β-hydroxyethylether, 1,4-Butandiol und 1,6-Hexandiol.

Die Herstellung des Verbundes aus der thermoplastischen Folie A und der thermoplastischen zähelastischen Folie B kann entweder durch Coextrusion der beiden Materialien mittels einer thermisch getrennten 2-Kanalbreitschlitzdüse erfolgen oder durch Extrusionsbeschichtung der Folie B mit der Schmelze des thermoplastischen Kunststoffes A.

Die Schmelze des Coextrudates wird über Kühlwalzen abgezogen und aufgewickelt.

Die Kompositionen B aus den einzelnen Bestandteilen B1, B2 und gegebenenfalls B3 werden in einem vorgeschalteten Compoundierschritt gemäß bekannter Methode vermischt; die dann resultierende Mischung wird zur Verbundherstellung, wie oben beschrieben, verwendet.

Die nachfolgenden Beispiele demonstrieren die überraschende vorteilhafte Prägungsstandfestigkeit bei höheren Temperaturen einer erfindungsgemäßen Verbundfolie.

### Beispiele

### Verwendetes Acrylatcopolymer B2 + B3, hergestellt nach EP 32 1832

Emulsionscopolymerisat aus 30 Gew.-% Acrylnitril, 70 Gew.-% n-Butylacrylat, vernetzt durch Copolymerisation mit 0,45 Gew.%, bezogen auf 100 Teile der Gesamtsumme aus Acrylnitril und Butylacrylat, Triallylcyanurat. Das Polymerisat wurde erzeugt durch radikalische, wäßrige Emulsionspolymerisation mit Na-Salzen von C₁₄-C₁₆-Alkylsulfonsäuren als Emulgator. Das Polymerisat besitzt einen Gelgehalt von 92 Gew.-% und eine mittlere Teilchengröße (d₅₀) von 0,12 µm. Die Emulsionspolymerisate B werden durch gemeinsame Koagulation mit 10 Gew.-% eines Styrol/Acrylnitrilemulsionspolymerisates (Monomerverhältnis 72/28) aufgearbeitet.

### Verwendetes Pfropfpolymerisat B2 + B3

Pfropfpolymerisat aus 60 Gew.-Teilen eines grobteiligen Acrylatkautschuks eines mittleren Teilchendurchmessers (d₅₀) von 0,50 µm und einem Gelgehalt (in Dimethylformamid) von 95 Gew.-% (hergestellt durch vernetzende Copolymerisation von n-Butylacrylat (Triallylcyanurat gemäß EP-A 34 748) und 30 Gew.-Teilen pfropfpolymerisierter Monomerer aus 72 Gew.-% Styrol und 28 Gew.-% Acrylnitril hergestellt durch radikalische Emulsionspolymerisation in Gegenwart des Acrylatkautschuklatex.
des Acrylatkautschuklatex. Das Pfropfpolymerisat C2 wird durch gemeinsame Koagulation mit 20 Gew.-% eines Styrol/Acrylnitrilemulsionspolymerisates (Monomerverhältnis 72/28) aufgearbeitet.
B1) Verwendetes Polyurethan
   Das Polyurethan wird beschrieben in EP 0 462 471 (Polyurethankomponenten A4), ein Polyetherurethan mit einem spez. Gewicht von 1,12 g/cm³.
A Verwendetes Polycarbonat
   Aromatisches Polycarbonat auf Bisphenol A mit einem M̅_{w} von 30.000 (ermittelt über ηᵣₑₗ in CH₂Cl₂ bei 20°C und einer Konzentration von 0,5 g/100 ml).

### Beispiel 1

Eine Folie aus aromatischen Polycarbonat A mit einer Dicke von 0,6 mm wird mit einer Mischung aus dem Polyetherurethan B1 und einem Acrylatkautschukpolymerisat B2 + B3 im Verhältnis 50 zu 50 in bekannter Weise beschichtet, so daß die Gesamtdicke des Verbundes 1,1 mm beträgt. Um eine Oberflächenstrukturierung der Schicht B zu erreichen, ist die stählerne Abzugswalze mit einem Prägedessin versehen, so daß die unter Druck und Wärme hergestellte Verbundfolie oberflächig z.B. eine Ledernarbenstruktur aufweist.

Die Verbundfolie behält auch nach der thermischen Vakuumverformung bei Oberflächentemperaturen > 150°C eine matte geprägte Oberfläche und weist darüber hinaus folgende Eigenschaften auf:
- sehr gute Eigenstandfestigkeit des Tiefziehteils auch ohne PUR-Füllschaum und Stützgerüst bei Prüftemperaturen von 130°C
- sehr gute Licht- und Wärmealterungsbeständigkeit
- keine Ausgasungen z.B. im Auto (Fogging)
- Beständigkeit gegen übliche Reinigungsmittel

## Patentansprüche

1. Mehrschichtfolien, bestehend aus
A einer 0,3 mm - 1,8 mm dicken thermoplastischen Folie mit einer Dauer-Temperaturbeständigkeit größer 130°C
und
B einer 0,4 mm - 1,5 mm dicken zäh-elastischen Folie aus einer Mischung aus
B1 einem thermoplastischen Polyester-, Polyether- und Polyethercarbonaturethan,
B2 einem Acrylatkautschukpolymerisat und gegebenenfalls
B3 einem Thermoplastharz aus der Reihe der Vinylpolymerisate (mit Ausnahme halogenhaltiger Monomere),
wobei die Komponente B1 zu 90 bis 10 Gew.-Teilen und die Komponente B2 zu 10 bis 90 Gew.-Teilen vorliegt.

2. Mehrschichtfolien nach Anspruch 1, dadurch gekennzeichnet, daß B2 ein Pfropfpolymerisat aus Vinylmonomerpolymerisat auf teilchenförmige, teilvernetzte Acrylatkautschuke darstellt.

3. Mehrschichtfolien nach Anspruch 1, dadurch gekennzeichnet, daß B2 ein teilchenförmiges, teilvernetzten Interpolymerisat aus Alkylacrylaten und Comonomeren aus der Reihe Acrylnitril, Styrol, Alkylmethacrylat darstellt.

4. Mehrschichtfolien nach Anspruch 1-3, dadurch gekennzeichnet, daß B2 eine Kombination aus Pfropfpolymerisaten und Interpolymerisaten darstellt.

5. Verwendung der Folie gemäß Anspruch 1-4 zur Herstellung von Crash pad-Folien, also als Außenhaut für Kfz-Armaturen.

## Claims

1. Multi-layered films consisting of
A a 0.3 mm - 1.8 mm thick thermoplastic film with a long-term resistance to temperatures higher than 130°C
and
B a 0.4 mm - 1.5 mm thick, ductile film made from a mixture of
B1 a thermoplastic polyester-, polyether- and polyethercarbonate-urethane,
B2 an acrylate rubber polymer and optionally
B3 a thermoplastic resin from the group of vinyl polymers (with the exception of halogen-containing monomers),
wherein 90 to 10 parts by wt. of component B1 and 10 to 90 parts by wt. of component B2 are present.

2. Multi-layered films according to Claim 1, characterised in that B2 is a graft polymer of a vinyl monomer polymer on particulate, partially cross-linked acrylate rubbers.

3. Multi-layered films according to Claim 1, characterised in that B2 is a particulate, partially cross-linked interpolymer of alkyl acrylates and comonomers from the group acrylonitrile, styrene, alkyl methacrylate.

4. Multi-layered films according to Claims 1 to 3, characterised in that B2 is a combination of graft polymers and interpolymers.

5. Use of the film according to Claims 1 to 4 for the production of crash pad film, that is as an external skin for motor vehicle fittings.

## Revendications

1. Feuilles à couches multiples consistant en
A) une feuille thermoplastique épaisse de 0,3 à 1,8 mm ayant une stabilité permanente à la température supérieure à 130°C et
B) une feuille élastique-tenace épaisse de 0,4 à 1,5 mm, consistant en un mélange de
B1) un polyester-, polyéther- ou polyéther-carbonate-uréthanne thermoplastique,
B2) un polymère du type caoutchouc d'acrylate et le cas échéant
B3) une résine thermoplastique choisie parmi les polymères vinyliques (à l'exception des polymères de monomères halogénés),
le composant B1) étant présent en proportions de 90 à 10 parties en poids et le composant B2) en proportions de 10 à 90 parties en poids.

2. Feuilles à couches multiples selon la revendication 1, caractérisées en ce que B2) est un polymère greffé d'un polymère de monomères vinyliques sur des caoutchoucs d'acrylates en particules partiellement réticulés.

3. Feuilles à couches multiples selon la revendication 1, caractérisées en ce que B2) est un interpolymère partiellement réticulé, en particules, consistant en acrylates d'alkyle et comonomères de la classe de l'acrylonitrile, du styrène et des méthacrylates d'alkyle.

4. Feuilles à couches multiples selon les revendications 1 à 3, caractérisées en ce que B2) est une combinaison de polymères greffés et d'interpolymères.

5. Utilisation des feuilles selon les revendications 1 à 4 pour la fabrication de feuilles de coussins de protection contre les accidents, c'est-à-dire sous forme de pellicule extérieure pour des tableaux de bord de véhicules.
